# EUROPEAN PATENT APPLICATION

(11) **EP 2 607 833 A1**
(43) Date of publication of application: **26.06.2013**
(21) Application number: 12197252.5
(22) Date of filing: 14.12.2012
(51) Int. Cl.: F28F 9/02, F28F 13/12, F28F 19/00, F28D 7/16, A23L 3/22, F28F 9/26, F28D 21/00

(54) **A module for improved running time in tubular heat exchangers**

(30) Priority: 22.12.2011 SE 1151255
(71) Applicant: Tetra Laval Holdings & Finance S.A., 1009 Pully (CH)
(72) Inventor: MATHISSON, Jaana, 22639 Lund (SE)
(74) Representative: Tetra Pak - Patent Attorneys SE

(57) **Abstract**

It is provided a module for reducing aggregation of at least one food component in food processing equipment. The module (200) comprises a hollow body having a first opening and a second opening. The first opening is configured to be connected to a first element (106) and to receive a product flow from said first element (106), and the second opening is configured to be connected to a second element (104) and to output said product flow to said second element (104). Further, a flow changing device (204) having at least two openings is placed in said hollow body, and is configured to generate turbulence in said product flow such that said turbulence reduces aggregation of said at least on food component in said second element (104).

## Description

### Technical Field

The invention generally relates to the field of food processing. More particularly, the invention relates to a device for enabling longer running time on tubular heat exchangers. In further detail, the invention relates to a module arranged to generate a turbulent flow such that aggregation of food components is reduced.

### Background of the invention

In the field of food processing, it is common practice to heat food in order to make sure that unwanted micro-organisms are killed. This can be achieved in different ways. If liquid food is heat treated, one example of reducing micro-organisms is by using a heat exchanger. There are different kinds of heat exchangers available on the market and which heat exchanger to choose is highly dependent on the type of food to be processed. Liquid food without pulp or fibers can be processed in plate heat exchangers, e.g. Tetra Plex™ marketed by Tetra Pak. However, if the liquid food contains pulp or fibers, such as juice, a tubular heat exchanger may be a better choice, e.g. Tetra Spiraflo™ marketed by Tetra Pak. Further, if the liquid food is viscous, sticky, crystalline or in any other way difficult to treat in a tubular heat exchanger a scraped surface heat exchanger may be used, e.g. Contherm™, also marketed by Tetra Pak.

A general problem when processing liquid food products, especially during heat treatment, is that deposits are formed in the equipment. The deposits may be caused by fouling during milk heat treatment, i.e. proteins and minerals aggregate, or by agglomeration of fibers or formation of pulp deposits during treatment of juices or other liquid food products comprising fibers or pulp.

In a tubular heat exchanger it is common to have at least one connection tube connecting a first tube set to a second tube set such that the product can flow from the first tube set via the connection pipe to the second tube set. The first and second tube set each comprises a number of parallel tubes, while the connection tube is one tube receiving from all tubes of the first tube sets and delivering to all tubes of the second tube set. When running the tubular heat exchanger the area between the connection tube and the second tube set, i.e. where the product flow goes from one tube to several tubes, is an area particularly exposed to forming of deposits. In order to reduce this forming of deposits and hence increasing the running time between the cleaning cycles, it has been proposed to have incorporated a device for influencing the flow, as mentioned in e.g. US 2009/0205813. The device causes a turbulent flow close to the inlets with the positive effect that less deposit is formed. Further, in US 2011/0259563 it is disclosed a connection element having a through hole and a separation edge formed on the circumference on the through hole for the same purpose.

A drawback of having a device or edge for generating a turbulent flow is that a pressure drop is achieved, which in turn implies that more energy is needed to generate an appropriate flow. Therefore, when designing the device, a trade-off is made between reducing the aggregation of food components and making an optimal piece of equipment from an energy standpoint. In other words there is a need from food producers to have a flexible system with long running time and low energy consumption.

### Summary

Generally, the inventor has realised that an optimal design of a flow changing device used for generating a turbulent flow such that less deposit is formed vary for different liquid food products. Since many food manufacturing companies are using the same equipment for different food products there is a need to have flexible equipment possible to adapt easily to the different products. Further, since less deposit implies longer running time between cleaning cycles, there is money to be saved for a food manufacturer if the equipment can be adapted for each food product individually.

In order to be able to easily adapt the equipment to a specific food product, the inventor propose to offer modules configured to be placed before sections in the equipment where deposits are likely to be formed, e.g. when a liquid product flowing in one tube is divided up into a number of smaller tubes. By having the possibility to adapt the flow changing device to the product an optimal solution can be found both from running time perspective, i.e. low amount of deposits due to the generated turbulence, and from energy consumption perspective, i.e. minimizing the pressure drop.

According to a first aspect a module for reducing aggregation of at least one food component in food processing equipment is provided. The module comprises a hollow body having a first opening and a second opening, the first opening being configured to be connected to a first element and to receive a product flow from the first element, and the second opening being configured to be connected to a second element and to output the product flow to the second element, a flow changing device having at least two openings placed in the hollow body, the flow changing device being configured to generate turbulence in the product flow such that the turbulence reduces aggregation of the at least one food component in the second element.

An advantage of having at least two openings in the flow changing device is that a turbulence flow can be generated sufficient for providing long running time at the same time as the pressure drop can be kept low providing for low energy consumption.

According to one aspect of the present invention the two openings may preferably define a between them a turbulence enhancing body. The turbulence enhancing body may preferably suspended by one or more suspension bars to ensure a rigid suspension and a symmetric flow pattern.

In one or more embodiments the turbulence enhancing body has an overall semispherical shape, with a convex upper side facing a flow of product in a production mode, and an essentially flat lower side facing away the opposite direction.

In a production mode the convex upper side is arranged to gently shift the product flow radially outwards. After the flow has passed the convex upper side it will try to reach the smaller tubes and fill the space between the lower side of the turbulence enhancing body and an inlet of the smaller tubes. This may in turn generate strong flows in a cross direction, which will assist in removing fibres and other particle buildup at the inlets of the smaller tubes.

A device according to one or more of the embodiments disclosed above will in an efficient manner shift a turbulent or laminar flow from the radially outer side of the device to a radially inner portion of the device. Thereby an enhanced rinsing effect is accomplished. The first element may be a connection tube and the second element may be a tube set comprising a number of parallel tubes.

The turbulence may reduce aggregation of at least one food component in inlets of the number of parallel tubes in the tube set.

The at least one food component may comprise fibers.

The at least one food component may comprise proteins.

The food processing equipment may be a tubular heat exchanger.

The flow changing device may comprise a set of vanes, blades or rotor blades.

The first opening of the hollow body may be configured to be connected to the first element by means of bolts.

The second opening of the hollow body may be configured to be connected to the second element by means of bolts.

The first opening of the hollow body may be configured to be connected to the first element and the second opening of the hollow body may be configured to be connected to the second element by means of one and the same set of bolts.

A length of the module may be 2 - 5 cm.

According to a second aspect a kit of parts is provided. The kit of parts comprises a module according to any of the preceding claims having a first length, and a complementary module having a second length, the second length being equal to the first length, such that the module can be connected to the first element and the second element, and the complementary module can be connected to the first element and a third element, wherein the first element is a U-bent connection tube adapted to be connected to the second element and the third element.

According to a third aspect a system for food processing is provided. The system comprises a tubular heat exchanger provided with a module according to the first aspect.

According to a fourth aspect a method for reducing aggregation of at least one food component in food processing equipment is provided. The method comprises determining a food component in a food product causing aggregation in the food processing equipment, selecting a module according to the first aspect having a flow changing device adapted for the food component, and mounting the module between the first element and the second element.

The method may further comprise mounting a complementary module between a third element and first element, such that the module can be connected to the first element and the second element, and the complementary module can be connected to the first element and the third element, wherein the first element is a U-bent connection tube adapted to be connected to the second element and the third element.

### Brief description of the drawings

The above, as well as additional objects, features and advantages of the present invention, will be better understood through the following illustrative and non-limiting detailed description of preferred embodiments of the present invention, with reference to the appended drawings, wherein:
Fig 1 a illustrates a tubular heat exchanger.
Fig 1b illustrates a connection tube connecting a first tube set to a second tube set.
Fig 2 illustrates a cross sectional view of a first embodiment of a module mounted to a tubular heat exchanger.
Fig 3 illustrates a cross sectional view of a second embodiment of the module mounted on the tubular heat exchanger.
Fig 4 illustrates a third embodiment of the module mounted on the tubular heat exchanger.
Fig 5 illustrates a fourth embodiment of the module mounted on the tubular heat exchanger.
Fig 6 illustrates a fifth embodiment of the module.
Fig 7 illustrates a sixth embodiment of the module.
Fig 8 illustrates a seventh embodiment of the module.
Fig 9a and 9b illustrate an eighth embodiment of the module.
Fig 10 illustrates a flow chart presenting steps in a method for reducing aggregation of at least one food component in food processing equipment.

### Detailed description of preferred embodiments

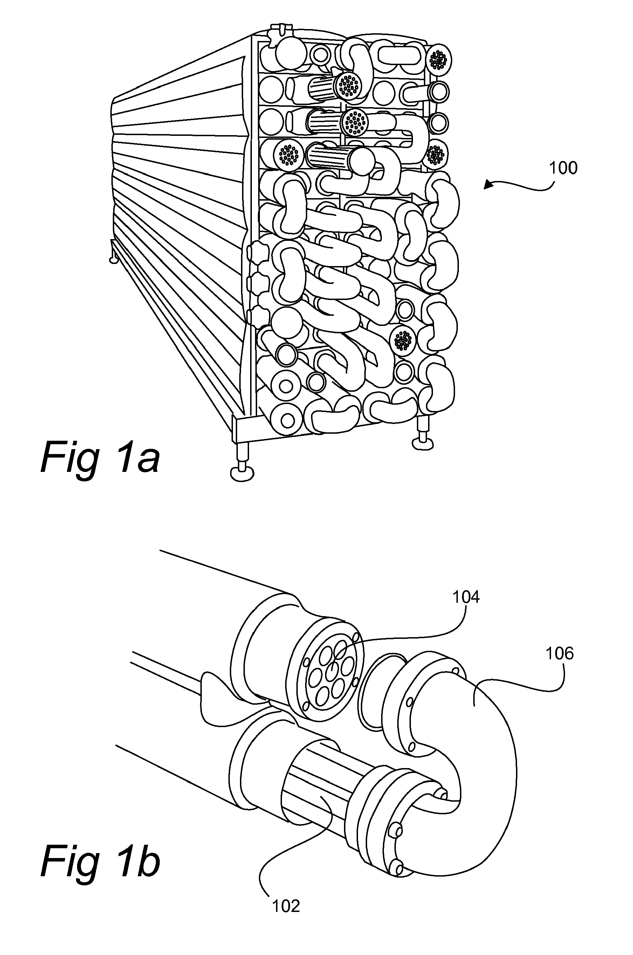

Fig 1 a illustrates a tubular heat exchanger 100, more particularly a Tetra Spiraflo™, suitable for heat treating milk, juice, nectar and other liquid food. In short, a food product, or any other product to be processed, flows in tubes bundled together in tube sets. The tubes are surrounded by a thermal transfer medium, such as hot water, heating up the product. It is common practice to connect the tube sets to each other by using connection tubes, such that long tubes are formed while keeping the tubular heat exchanger 100 compact.

The tubular heat exchanger 100 may also be used for cooling down a product by using e.g. cold water instead of hot water as thermal transfer medium. In plants where the product should be heated up at one stage of the process, e.g. in order to reduce the number of microorganisms, and cooled down at another stage, e.g. in order to cool down the product before it is stored and later put in packages, the tubular heat exchanger may be used as a so-called regenerative system, i.e. that the product itself is used as a thermal transfer medium. A regenerative system may be used in a dairy where incoming milk is heated up at the same time as outgoing milk is cooled down. An advantage of a regenerative system is that the energy consumption of the equipment may be significantly decreased.

Further, different products need to be treated in different ways, e.g. due to fibers or other food components, and different producers want to treat the products in different ways. In order to be able to offer a tubular heat exchanger 100 adapted to the specific needs and wishes of a producer a modular design is used. For example, in order to produce a wide range of models adapted to specific needs for each customer only a few frames are used. More particularly, even though tube sets with different diameters are used the same frame can be used, which of course provides for that a more economic production can be achieved and that a wider range of alternatives may be offered.

As illustrated in fig 1b, a first tube set 102, in this particular example comprising seven tubes bundled together, may be connected to a second tube set 104, also comprising seven tubes bundled together, by a connection tube 106. For inspection inside the tubes of the first tube set, the connection tube 106 may be released, thereby making it possible to look inside the tubes. Further, in order to inspect the outside of the tubes the tube set may be pulled out from the housing holding the tube sets.

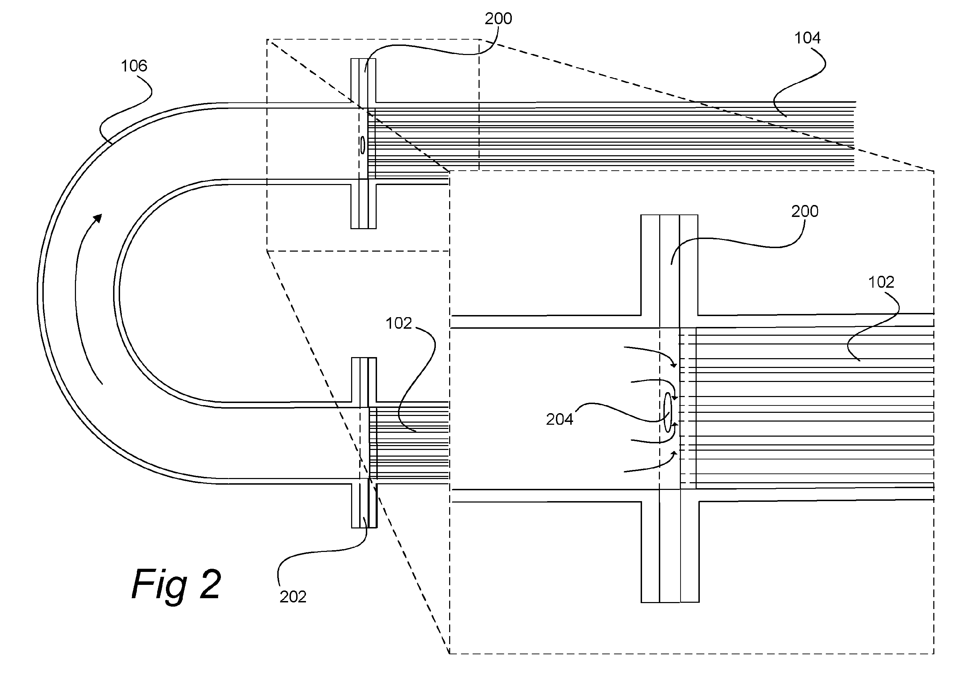

Fig 2 illustrates a cross sectional view of the first tube set 102 and the second tube set 104 connected to each other via the connection tube 106. In order to generate a turbulent flow in a connection area between the connection tube 106 and the second tube set 104 a module 200 comprising a flow changing device 204 is placed between these two. Since the module 200 will place the connection tube 106 a distance from the second tube set 104, a distance member 202 may be used between the first tube set 102 and the connection tube 106 in order to compensate for this displacement. An advantage of having such a two part solution - the module 200 and the distance member 202 - is that a flexible and modular tubular heat exchanger can be achieved that can be adapted to specific customer needs by only using a few different parts. Alternatively, though not illustrated, instead of using the distance member 202 the connection tube 106 may be adapted to compensate for displacement caused by the module 200.

Though not explicitly illustrated, the flow changing device 204 may be attached to the module 200 via one or several attachment members.

The module 200 may be attached to the second tube set 104 and the connection tube 106 by using bolts. These bolts may also be used for attaching the module 200 to the second tube set 104.

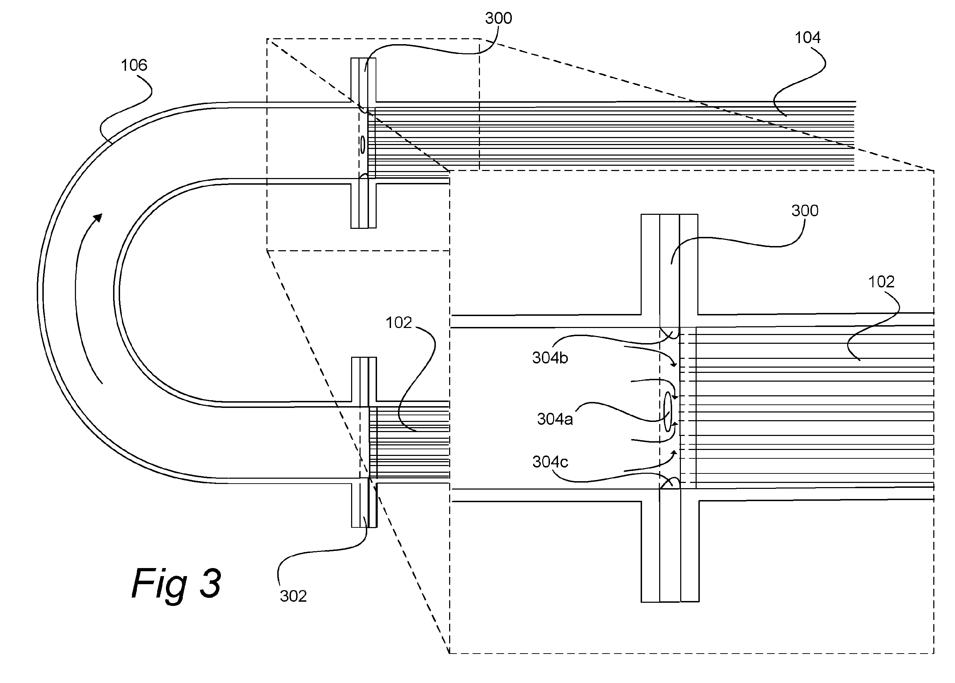

Fig 3 illustrates a cross sectional view of another embodiment of the two part solution comprising a module 300 and a distance member 302. As in fig 2, the first tube set 102 is connected to a second tube set 104 via a connection tube 106. In the module 300, the flow changing device 304a, 304b, 304c comprises a plurality of elements. More specifically, the flow changing device 304a, 304b, 304c comprises a centric flow changing device 304a and a number of peripheral flow changing devices 304b, 304c. The module 300 may be connected by bolts in the same way as the module 200 illustrated in fig 2.

As previously mentioned, which module 200, 300 to use may depend on the product to be processed, but also energy efficiency. More specifically, a module 200, 300 generating more turbulence than needed for reducing the aggregation of food components will result in a tubular heat exchanger consuming more energy than actually needed. By having a flexible and modular system the tubular heat exchanger may be optimised easily such that both these demands may be satisfied in a good way.

For example, in a dairy, a tubular heat exchanger is used for heat treating milk. Due to fouling near the inlet of the second tube set 104 the tubluar heat exchanger must be cleaned often, which means less time for milk processing, increased water and energy consumption and increased use of cleaning agents. In order to reduce the amount of fouling a module 200 comprising a single concentric flow changing device 204 and a distance member 202 are added. After trying out this set up it is concluded that the problem of fouling is still present, though mitigated, and the module 300 comprising a plurality of flow changing devices 304a, 304b, 304c is tested as well. Even though more energy is needed due to the pressure drop generated by the plurality of flow changing devices 304a, 304b, 304c the amount of fouling is significantly decreased when using the module 300. After taking all effects into account it is decided to use the module 300.

By having different modules as illustrated by the example above, a flexible tubular heat exchanger is achieved which easily can be adapted to specific customer needs. Further, by having the module 200, 300 small it is more convenient for a service engineer to bring several different modules to a customer site.

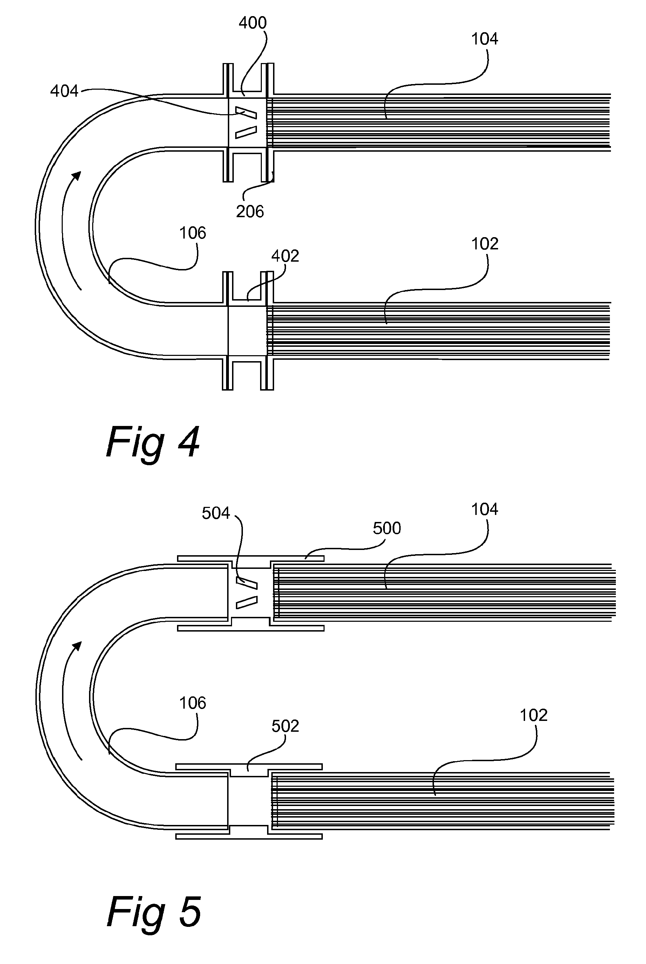

Fig 4 illustrates a cross sectional view of the first tube set 102 and the second tube set 104 connected via the connection tube 106. Between the connection tube 106 and the second tube set 104 a module 400 can be placed, and between the first tube set 102 and the connection tube 106 a distance member 402 can be placed. Unlike the modules 200, 300 illustrated in fig 2 and fig 3, one set of bolts can be used for attaching the module 400 to the second tube set 104 and another set of bolts may be used for attaching the module 400 to the connection tube 106. By using two set of bolts in this way a longer module can be achieved, which may be beneficial for generating a turbulent flow without loosing a significant amount of energy.

Alternative ways of attaching a module 500, comprising a flow changing deive 504, and a distance member 502 is illustrated in fig 5. Instead of using bolts, the module 500 and the distance member 502 can be attached by screwing or clamping.

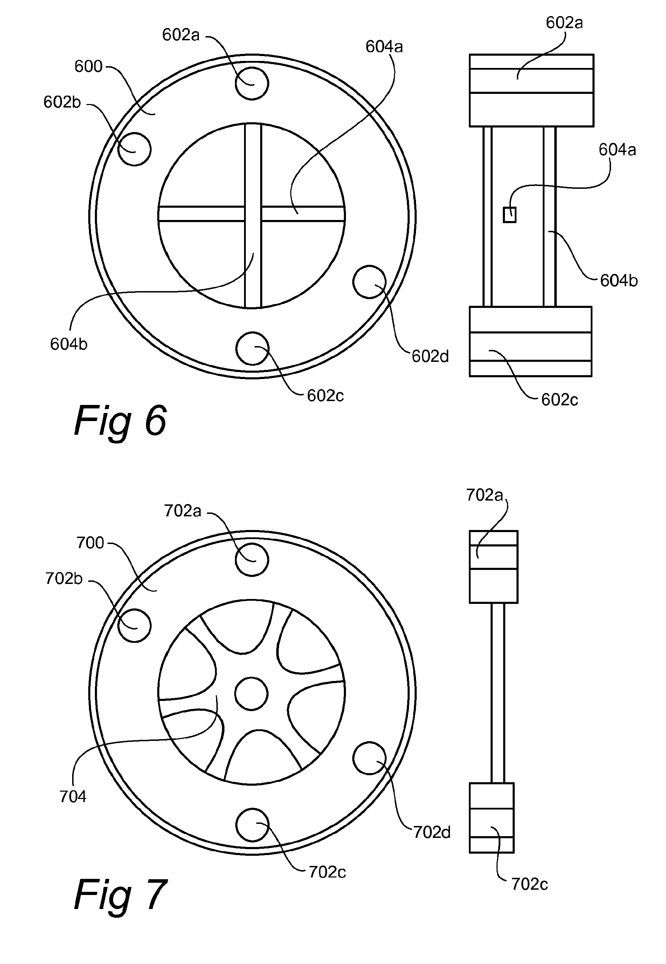

Fig 6 illustrates a front view and a side view of a module 600 that can be used for generating a turbulence such that aggregation of food components is reduced. In this example four holes 602a, 602b, 602c, 602d are provided for attachment purposes. Further, two shafts - a first shaft 604a and a second shaft 604b - function as flow changing device.

Another example of a module 700 is illustrated in fig 7. As the example illustrated in fig 6, also this example can be provided with four holes 702a, 702b, 702c, 702d. Unlike the example in fig 6, the module 700 have a flow changing device 704 adapted to conform with inlets of tubes of a tube set intended to be placed downwards the flow changing device 700.

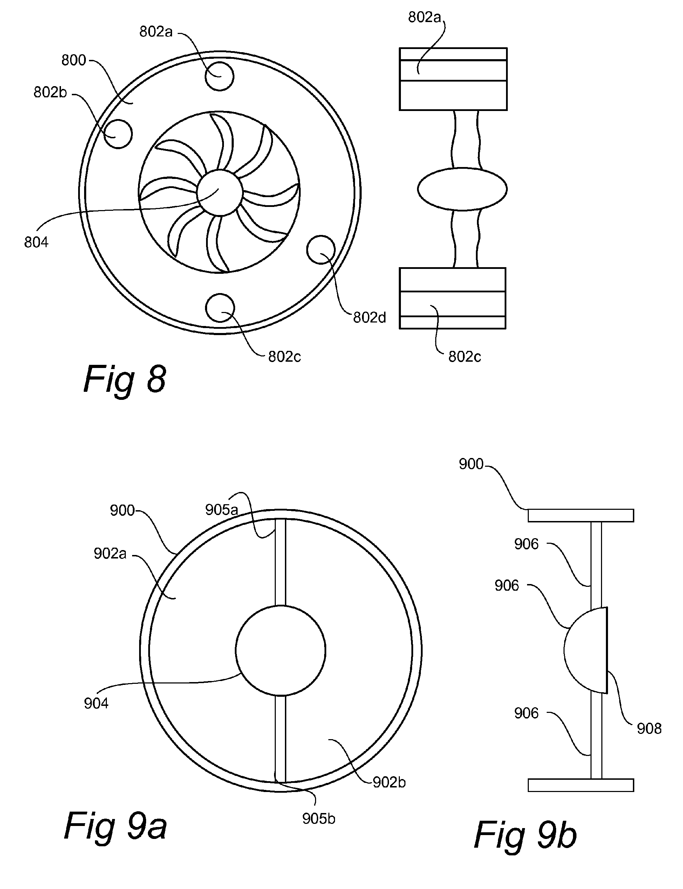

Yet another example is illustrated in fig 8. According to this example, a module 800 comprises four holes 802a, 802b, 802c, 802d for attachment purposes and a flow changing device 804 for generating turbulence. The flow changing device 804 resembles of an impeller. The number of blades and the inclination of these may be selected depending on the amount of turbulence to be achieved.

Figs. 9a 9b illustrates in a front view and a side view respectively, a module 900 according to a further example. The module 900 comprises two holes 902a and 902b, and a flow changing device 904 in the form of a turbulence enhancing body defined between the holes. The flow changing device 904 is suspended by two suspension bars 905a, 905b. In the present example the suspension bars 905a, 905b are not designed to contribute to the generation of tubulence, they are merely designed to suspend the flow changing device rigidly. Since the suspension bars 905a and 905b will affect the flow to some degree they are in the present example arranged symmetrically. In an example including three or more suspension bars (i.e. three or more openings) these suspension bars may be arranged symmetrically too. In the present example the suspension bars 905a and 905b have a circular cross section.

In an alternative embodiment only one suspension bar may be used.

Returning to the turbulence enhancing body of the present example it has a convex upper side 906 facing the flow of product, whereas the opposite side, the lower side 908, is essentially flat. The shape of the flow changing device is thus hemispherical in the present example. In other examples this shape may be designed slightly differently, such that the convex upper side 906 is more, or less, protruding than a sphere. This is indicated by the dotted lines in Fig. 9b. The lower side 908 is flat in the present example, yet in other examples it may have another shape e.g. be slightly convex or have another shape. Within the context of the present embodiment "hemispherical" is used to include these minor variations of the overall impression.

It should also be noted that the view of Figs. 9a and 9b are only schematic. Though not explicitly shown, the skilled person would realize how to construct attachement flanges etc, which may be needed to attach the module 900 to a previous installation. As for the other examples food grade stainless steel is a preferred material, though other food grade materials having appropriate properties, e.g. in terms of durability, are not excluded.

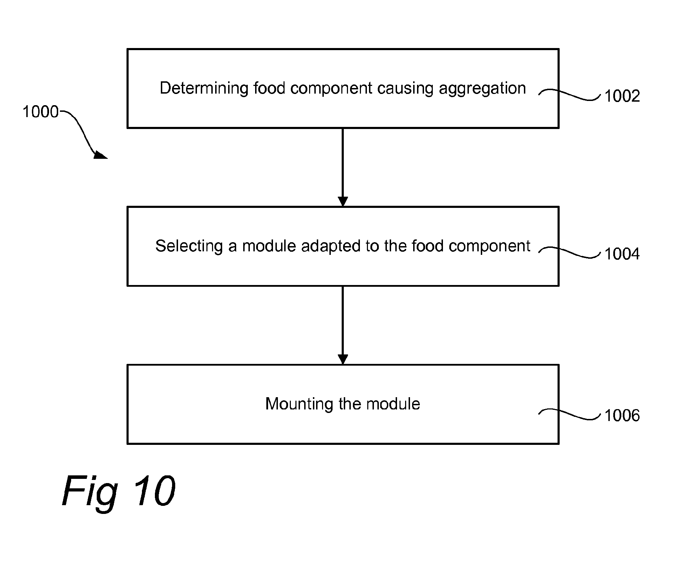

Fig 10 illustrates a flow chart illustrating a method for reducing aggregation of at least one food component in food processing equipment. In a first step 1002, a food component in a food product causing aggregation is determined. For instance, if milk is being processed there might be a need to reduce aggregation of protein and minerals.

In a second step 1004, a module is selected based on which kind of food component aggregation that is to be reduced.

In a third step 1006, when it is decided which module to use this module is mounted in the food processing equipment, such as a tubular heat exchanger.

Further, though not illustrated, the module may be used for other purposes as well. For instance, if a sensor is placed in a pipe a module may be placed in front of the sensor in order to generate a turbulent flow such that less deposit are formed on the sensor.

Moreover, though not illustrated, in order to achieve a desired turbulent flow a number of modules may be combined, i.e. placed after each other. In this way the kit of parts may also comprise a number of modules configured to be combined. In the same way the system may comprise a number of combined modules and the method may comprise selecting a number of modules to be combined, as an alternative to select one module, and mounting the number of modules.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A module for reducing aggregation of at least one food component in food processing equipment, said module comprising
a hollow body having a first opening and a second opening,
said first opening being configured to be connected to a first element and to receive a product flow from said first element, and
said second opening being configured to be connected to a second element and to output said product flow to said second element,
a flow changing device having at least two openings placed in said hollow body, said flow changing device being configured to generate turbulence in said product flow
such that said turbulence reduces aggregation of said at least one food component in said second element.

2. The module according to claim 1, wherein said first element is a connection tube and said second element is a tube set comprising a number of parallel tubes.

3. The module according to claim 2, wherein said turbulence reduces aggregation of at least one food component in inlets of said number of parallel tubes in said tube set.

4. The module according to any one of the preceding claims, wherein said at least one food component comprises fibers.

5. The module according to any one of the preceding claims, wherein said at least one food component comprises proteins.

6. The module according to any one of the preceding claims, wherein said food processing equipment is a tubular heat exchanger.

7. The module according to any one of the preceding claims, wherein said flow changing device comprises a set of vanes, blades or rotor blades.

8. The module according to any one of the preceding claims, wherein said flow changing device comprises a turbulence enhancing body suspended in suspension bars, the turbulence enhancing body having an overall hemispherical shape.

9. The module according to any one of the preceding claims, wherein said first opening of said hollow body is configured to be connected to said first element by means of bolts.

10. The module according to any one of the preceding claims, wherein said second opening of said hollow body is configured to be connected to said second element by means of bolts.

11. The module according to any one of the claims 1 to 8, wherein said first opening of said hollow body is configured to be connected to said first element and said second opening of said hollow body is configured to be connected to said second element by means of one and the same set of bolts.

12. The module according to any one of the preceding claims, wherein a length of said module is 2 - 5 cm.

13. A kit of parts comprising
a module according to any of the preceding claims having a first length, and
a complementary module having a second length, said second length being equal to said first length,
such that said module can be connected to said first element and said second element, and said complementary module can be connected to said first element and a third element, wherein said first element is a U-bent connection tube adapted to be connected to said second element and said third element.

14. A system for food processing comprising a tubular heat exchanger provided with a module according to any of the claims 1 to 12.

15. A method for reducing aggregation of at least one food component in food processing equipment, said method comprising
determining a food component in a food product causing aggregation in said food processing equipment,
selecting a module according to any one of the claims 1 to 11 having a flow changing device adapted for said food component, and
mounting said module between said first element and said second element.

16. The method according to claim 15, wherein said method further comprising
mounting a complementary module between a third element and first element,
such that said module can be connected to said first element and said second element, and said complementary module can be connected to said first element and said third element, wherein said first element is a U-bent connection tube adapted to be connected to said second element and said third element.
